# EUROPEAN PATENT SPECIFICATION

(11) **EP 1 381 098 B1**
(45) Date of publication and mention of the grant of the patent: **28.11.2012**
(21) Application number: 02015728.5
(22) Date of filing: 12.07.2002
(51) Int. Cl.: H01M 4/1391, H01M 4/1393, H01M 4/587

(54) **Non-aqueous electrolytic solution secondary battery**
Sekundärbatterie mit nicht-wässriger Elektrolytlösung
Batterie secondaire à électrolyte non aqueux

(43) Date of publication of application: 14.01.2004
(73) Proprietor: Shin-Kobe Electric Machinery Co., Ltd., 103-0023 Tokyo (JP)
(72) Inventor: Nakai, Kenji, Fukaya-shi, Saitama, 366-0035 (JP); Hironaka, Kensuke, Fukaya-shi, Saitama, 366-0801 (JP)
(74) Representative: Viering, Jentschura & Partner

(56) References cited:
- EP-A- 0 603 397
- EP-A- 0 606 533
- PATENT ABSTRACTS OF JAPAN vol. 1999, no. 01, 29 January 1999 (1999-01-29) & JP 10 270019 A (SHIN KOBE ELECTRIC MACH CO LTD), 9 October 1998 (1998-10-09)
- PATENT ABSTRACTS OF JAPAN vol. 1999, no. 02, 26 February 1999 (1999-02-26) & JP 10 312790 A (TOYOTA MOTOR CORP), 24 November 1998 (1998-11-24)
- PATENT ABSTRACTS OF JAPAN vol. 1999, no. 05, 31 May 1999 (1999-05-31) & JP 11 031508 A (MATSUSHITA ELECTRIC IND CO LTD), 2 February 1999 (1999-02-02)
- PATENT ABSTRACTS OF JAPAN vol. 1999, no. 12, 29 October 1999 (1999-10-29) & JP 11 199211 A (HITACHI CHEM CO LTD), 27 July 1999 (1999-07-27)
- PATENT ABSTRACTS OF JAPAN vol. 2000, no. 23, 10 February 2001 (2001-02-10) & JP 2001 167755 A (KANSAI COKE & CHEM CO LTD), 22 June 2001 (2001-06-22)
- PATENT ABSTRACTS OF JAPAN vol. 2000, no. 07, 29 September 2000 (2000-09-29) & JP 2000 106189 A (MATSUSHITA ELECTRIC IND CO LTD), 11 April 2000 (2000-04-11)
- PATENT ABSTRACTS OF JAPAN vol. 1999, no. 08, 30 June 1999 (1999-06-30) & JP 11 067216 A (RICOH CO LTD), 9 March 1999 (1999-03-09)

## Description

The present invention relates to a secondary battery, and in particular relates to a secondary battery where an electrode group where a positive electrode which lithium-manganese complex oxide is used as positive electrode active material, and a negative electrode which carbon material is used as negative electrode active material and resin composition is used as a binder are separated through a separator, is infiltrated by non-aqueous electrolytic solution and accommodated in a battery container, and which can discharge 50 W or more for at least 10 seconds continuously.

### DESCRIPTION OF THE RELATED ART

Because a non-aqueous electrolytic solution secondary battery represented by a lithium-ion secondary battery has a high energy density as its merit, it is mainly used as a power source or power supply for portable equipment such as a VTR camera, a notebook type personal computer, a portable telephone or the like. The interior structure of this battery is generally of a winding type as described below. Each of a positive electrode and a negative electrode of the battery is formed in a strip-shape where active material is applied to a metal foil, and a winding group is spirally formed by winding the positive electrode and the negative electrode through a separator so as not to abut directly with each other. This winding group is accommodated in a cylindrical battery container or a can, and, after the battery container is filled with electrolytic solution, it is sealed.

An ordinary cylindrical lithium-ion secondary battery has a dimension of a diameter of 18mm and a height of 65mm, which is called 18650 type, and it is widely spread as a small-sized lithium-ion battery for civilian use. Lithium cobaltate having high capacity and long life is mainly used as positive electrode active material for the 18650 type lithium-ion secondary battery, and battery capacity of the 18650 type battery is approximately 1.3 Ah to 1.7 Ah and battery power thereof is about 10W or so.

Meanwhile, in order to cope with the environmental problems in the automotive industry, development of electric vehicles (EVs) whose power sources are confined completely to batteries so that there is no gas exhausting and development of hybrid electric vehicles (HEVs) where both internal combustion engines and batteries are used as their power sources have been facilitated, and some of them have reached a practical stage.

Such a battery which is a power source for EV or HEV is required to have high power and high energy characteristics, and an attention is being paid to a lithium-ion battery as a battery which meets such requirements. In order to spread these EVs and HEVs, it is essential to reduce the cost of such a battery. For this reason, lowering the cost for battery material is required, especially, in a case of positive electrode active material, for example, a special attention is being paid to manganese oxides which are abundant as natural resources, and improvement of such batteries has been carried out in order to attain high performance thereof. Further, in the batteries for the EVs whose power sources are perfectly confined to the batteries, not only high capacity which relates directly to a continuous running distance per charge but also high power (output) which affects acceleration of the EVs are required.

In order to obtain stable running performance of the EVs and HEVs, regardless of residual capacity of the batteries, it is necessary to obtain stable powers from the batteries. That is, it is desirable that the power of the battery does not decrease extremely even when a depth of discharge (DOD), which shows a ratio of a discharge amount to rated capacity of the battery, is in a deep state, and that the power to be taken out from the battery does not change even when the battery is charged repeatedly.

Besides, when the residual capacity of the battery becomes low, it is necessary to detect the residual capacity easily so that a driver of the vehicle can recognize the residual capacity. This corresponds to a mechanism for detecting a residual amount of fuel in a fuel tank and for indicating it on a fuel gauge or meter like a vehicle whose power source is fossil fuel such as gasoline, light oil etc.

JP 10 270019 A, JP 10 312790 A, and JP 11 031508 A describe negative electrode materials for batteries, wherein the materials consist of *"mixed particles"* in which graphite particles and particles of amorphous carbon are mixed.

JP 11 199211 A describes a lithium secondary battery excellent in rapid charge and discharge property, cycle property, irreversible capacity at the first cycle, wherein graphite particles having a specific cover structure are used as the negative electrode active material. The graphite particles are formed by aggregating or bonding plural flat graphite particles so that oriented surfaces are non-parallel to each other and, then, covering the particle surface with an amorphous carbon.

### SUMMARY OF THE INVENTION

In view of the above circumstances, an object of the present invention is to provide a non-aqueous electrolytic solution secondary battery which can obtain stable power regardless of a depth of discharge and which can detect residual capacity easily.

In order to achieve the above object, according to the present invention, there is provided a secondary battery for an electric or hybrid electric vehicle comprising an electrode group wherein a positive electrode having lithium-manganese complex oxide as positive electrode active material, and a negative electrode having carbon material as negative electrode active material and resin composition as a binder, being separated through a separator, and the electron group being infiltrated by non-aqueous electrolytic solution and accommodated in a battery container in order to provide a so-called non-aqueous electrolytic solution secondary battery, and which can discharge 50 W or more for at least 10 seconds continuously, wherein the carbon material consists of binding particles in which graphite particles are bound together via an amorphous carbon, and having the characteristic as defined in claim 1.

In the present invention, the positive electrode which the lithium-manganese complex oxide is used as the positive electrode active material and the negative electrode which the carbon material is used as the negative electrode active material, are used. Since an apparent density of the carbon material is increased by the amorphous carbon bound among the graphite particles due to the binding particles in which the graphite particles are bound together via the amorphous carbon as the carbon material, the power of the battery can be collected efficiently from the whole of the negative electrode active material. Accordingly, the non-aqueous electrolytic solution secondary battery which can obtain the stable power regardless of the DOD can be realized. Further, it is known that an ordinary lithium secondary battery in which the amorphous carbon is used as the negative electrode active material has a linear relationship between the DOD and the voltage. For this reason, in the non-aqueous electrolytic solution secondary battery which includes the amorphous carbon as the negative electrode active material according to the present invention, the residual capacity can be detected easily by measuring the voltage.

In this invention, when scale-shaped graphite particles are used as the graphite particles in the binding particles, the non-aqueous electrolytic solution secondary battery which has excellent initial power can be obtained. Further, when a ratio of amorphous carbon in the binding particles is set in a range of from 4 to 24%, the power of the battery can be suppressed from decreasing sharply even when the DOD becomes deep and initial discharging capacity can be maintained even when the battery is used repeatedly. Furthermore, when an average particle diameter of the binding particles is set in a range of from 14 to 40µm, both initial charging/discharging efficiency and the initial power can be excellent and the initial power can be maintained even when the battery is used repeatedly. Moreover, when an average particle diameter of the graphite particles is set in a range of from 3 to 16µm, both the initial charging/discharging efficiency and the initial power can be excellent and the initial power can be maintained even when the battery is used repeatedly. Especially, when such binding particles and thermosetting plasticized polyvinyl alcohol resin composition as a binder are used, the stable power regardless of the DOD can be maintained in the same level almost as before charging/discharging cycles even after the cycles are repeated.

Incidentally, "can discharge 50 W or more for at least 10 seconds continuously" means that it is necessary to maintain the power of 50 W or more for at least 10 seconds continuously when a driver steps on an accelerator (throttle) pedal to accelerate the electric vehicle. In a case of a battery whose continuous power is 20 W or below; for example, the number of the batteries which are connected in series and/or parallel and which are mounted on the EVs or HEVs increases. Therefore, such a small power battery is unsuitable for the electric vehicles practically.

### BRIEF DESCRIPTION OF THE DRAWINGS

Fig. 1 is an explanation view showing conceptually a portion of binding particles of negative electrode carbon material according to the present invention; and
Fig. 2 is a sectional view of a cylindrical lithium-ion battery of an embodiment to which the present invention can be applied.

### DETAILED DESCRIPTION OF THE PREFERRED EMBODIMENTS

An embodiment where the present invention is applied to a cylindrical lithium-ion battery for an electric vehicle (EV) will be explained below with reference to the drawings.

### (MANUFACTURE OF POSITIVE ELECTRODE)

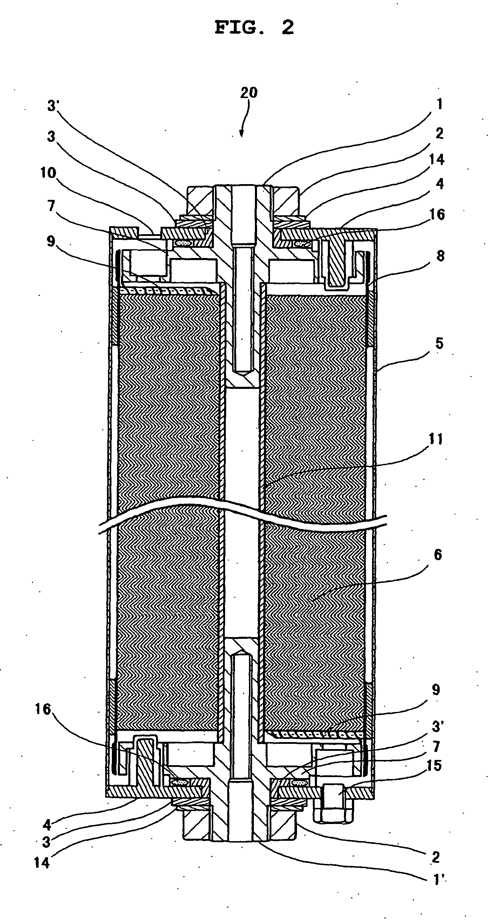

A powdered lithium manganate (LiMn₂O₄) whose average particle diameter is approximately 20µm as positive electrode active material, a graphite whose average particle diameter is approximately 6µm as first conductive material, an acetylene black as second conductive material, and a polyvinylidene fluoride (PVdF) as a binder are mixed at a ratio of 85: 8: 2: 5 by weight%, and the resultant mixture is added and mixed with N-methyl-2-pyrrolidone (NMP) as dispersion solvent to produce slurry. The slurry thus produced is applied to both surfaces of an aluminum foil (positive electrode collector) having a thickness of 20µm. The amount of applied mixture (positive electrode mixture) except for NMP is 290 g/m². At this time, a non-coated portion with a width of 50mm is left in a longitudinal direction on one side edge of the positive electrode. Thereafter, the aluminum foil thus applied with the mixture is dried, pressed and cut to manufacture a strip-shaped positive electrode having the positive electrode mixture applied portion with a width of 300mm, a length of 6.33m and the positive electrode mixture applied portion with a thickness of 219µm. (The thickness of the aluminum foil is excluded.) The apparent density of the positive electrode mixture layer is set to 2.65g/cm³. The non-coated portion of the positive electrode is notched, and the remaining portion thereof serves as lead pieces (See reference numeral 9 in Fig. 2). Further, the spacing between adjacent lead pieces is set to 50mm and the width of each lead pieces is set to 10mm.

### (MANUFACTURE OF NEGATIVE ELECTRODE CARBON MATERIAL)

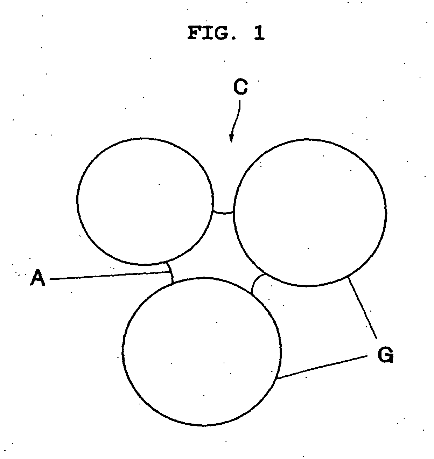

Graphite particles having a predetermined particle diameter as described later and a petroleum pitch are mixed with and then sintered at approximately 1000 °C in the atmosphere of inert gas such as nitrogen, argon and the like, then cracked and sieved out to obtain binding particles having a desired particle diameter in which the graphite particles are bound together via an amorphous carbon. In order to obtain the binding particles having the desired particle diameter efficiently, the graphite may be cracked and sieved out in advance. The graphite can be manufactured in the following manner: A resin body as raw material such as petroleum pitch and the like is sintered at approximately 1000 °C to 1400 °C in the atmosphere of the inert gas such as nitrogen, argon and the like. The product thus sintered is cracked and then heat treatment is carried out at approximately 3000 °C in the same atmosphere. Commercial products may also be used as described below. As shown in Fig. 1, the binding particles C as negative electrode carbon material thus manufactured by the heat treatment consist of the amorphous carbon A and the graphite particles G, and the graphite particles G are bound together via the amorphous carbon A. An amount of the amorphous carbon A in the binding particles C can be determined by a difference between the weight of the graphite particles G before sintering and the weight of the binding particles C after sintering. Further, a ratio of the amorphous carbon A in the binding particles C (hereinafter, called an amorphous carbon phase ratio) can be determined by a percentage of the weight of the amorphous carbon A to the weight of the binding particles C. Incidentally, average particle diameters of the graphite particles G and the binding particles C can be measured by a laser diffraction particle size distribution meter or the like.

### (MANUFACTURE OF BINDER RESIN COMPOSITION)

Thermosetting plasticized polyvinyl alcohol resin where a first resin component which is consisted of thermosetting polyvinyl alcohol group resin and a second resin component which is consisted of acrylic resin group plasticizer are mixed and dissolved into appropriate solvent (in the present embodiment, N-methyl-2-pyrrolidone, hereinafter, called NMP), is used. The thermosetting polyvinyl alcohol group resin as the first resin component can be obtained in the following manner: Polyvinyl alcohol group resin having an average degree of polymerization of approximately 2000 is reacted with cyclic acid anhydride such as succinic acid anhydride and the like in organic solvent such as NMP or the like under the presence of catalyst such as triethylamine and the like and under the anhydrous condition practically. It is preferable that a reaction ratio of the cyclic acid anhydride to the polyvinyl alcohol group resin is set to approximately 0.1 equivalent of anhydride group in the cyclic acid anhydride to 1 equivalent of alcoholic hydroxyl group in the polyvinyl alcohol group resin.

A reactant of lauryl acrylate/acrylic acid copolymer with bifunctional type epoxy resin can be used for the acrylic resin group plasticizer as the second resin component.

Thermosetting plasticized polyvinyl alcohol resin composition which is used in the present embodiment is synthesized as follows:
The first resin component is synthesized in the following manner: 51 g of polyvinyl alcohol whose degree of saponification is approximately 98%, 650 g of NMP and 10 g of toluene are put into a separable flask equipped with an agitator, a thermometer, a cooling tube, a distillating tube and a nitrogen gas introducing tube, and then are heated up to 195 °C for taking a time of about 30 minutes while applying nitrogen bubbling and stirring thereto. The moisture of the mixture is azeotroped while refluxing the toluene at the temperature of 195 °C for two hours so as to remove the moisture in the flask. Then, the mixture from which the toluene is removed is cooled down to 120 °C and is added with 7.7 g of the succinic acid anhydride at the temperature of 120 °C to react with the succinic acid anhydride for one hour (approximately 0.07 equivalent of acid anhydride group to 1 equivalent of the alcoholic hydroxyl group in the polyvinyl alcohol). After cooling down to the room temperature, NMP solution whose first resin component is approximately 8% by weight can be obtained.
The second resin component is synthesized in the following manner: 110 g of non-solvent type lauryl acrylate/acrylic acid copolymer whose weight average molecular weight is approximately 3100 and 71 g of bisphenol A type epoxy resin (approximately 2 equivalent of epoxy group to 1 equivalent of carboxyl group in the non-solvent type lauryl acrylate/acrylic acid copolymer) are put into a separable flask equipped with an agitator, a thermometer, a cooling tube, a distillating tube and a nitrogen gas introducing tube, and then are heated up to 150°C for taking a time of about 15 minutes while applying nitrogen bubbling and stirring thereto. The reaction is progressed by maintaining at the temperature of 150 °C for two hours and then the mixture is added with 78 g of NMP and is cooled down to the room temperature. As a result, NMP solution whose second resin component is approximately 70% by weight can be obtained.

The NMP solution whose first resin component is approximately 8% by weight and the NMP solution whose second resin component is approximately 70% by weight are mixed at a ratio of 100: 10 by weight% of each resin component. As a result, NMP solution which is the thermosetting plasticized polyvinyl alcohol resin composition can be obtained.

### (MANUFACTURE OF NEGATIVE ELECTRODE)

92 weight parts of the negative electrode carbon material described above is added with 8 weight parts of a PVdF as a binder, and is further added and mixed with NMP as dispersion solvent to produce slurry. The slurry thus produced is applied to both surfaces of a rolled copper foil (negative electrode collector) having a thickness of 10µm. Alternatively, 92 weight parts of the negative electrode carbon material described above is added and mixed with 8 weight parts of NMP solution where the thermosetting plasticized polyvinyl alcohol resin composition includes the first resin component and the second resin component to produce slurry. The slurry thus produced is applied to both surfaces of a rolled copper foil (negative electrode collector) having a thickness of 10µm. The amount of applied mixture (negative electrode mixture) except for NMP is 97 g/m². A non-coated portion with a width of 50mm is left in a longitudinal direction on one side edge of a negative electrode. Thereafter, the copper foil thus applied with the mixture is dried, pressed and cut to manufacture a strip-shaped negative electrode having the negative electrode mixture applied portion with a width of 305mm, a length of 6.51m and the positive electrode mixture applied portion with a thickness of 139µm. (The thickness of the copper foil is excluded.) At this time, the negative electrode is pressed to set the porosity of the negative electrode mixture layer to about 35%. Thereafter, vacuum drying and heat treatment are carried out to the negative electrode in which the thermosetting plasticized polyvinyl alcohol resin is used as a binder in order to harden the negative electrode by heat for 16 hours at 150 °C. The non-coated portion of the negative electrode is notched like the case of the positive electrode and the remaining portion thereof serves as lead pieces (See reference numeral 9 in Fig. 2). Further, the spacing between adjacent lead pieces is set to 50mm and the width of each lead pieces is set to 10mm.

### (MANUFACTURE OF BATTERY)

The strip-shaped positive electrode and negative electrode thus manufactured are wound though a microporous separator made of polyethylene and having a width of 310mm and a thickness of 40µm so that both the electrodes do not abut directly with each other. At this time, the lead pieces 9 of the positive electrode and negative electrode are respectively positioned at both end faces opposed to each other with respect to the winding group 6. The diameter of the winding group 6 is adjusted to set in a range of 64 ± 0.3mm. Incidentally, the length of the negative electrode is set to be longer than that of the positive electrode by 18cm so as the positive electrode not to go beyond the negative electrode at the innermost layer of the winding group in a winding direction and the positive electrode not to go beyond the negative electrode at the outermost layer of the winding group in the winding direction. Further, the width of the negative electrode mixture applied portion is set to be longer than that of the positive electrode mixture applied portion by 5mm so as the positive electrode mixture applied portion not to go beyond the negative electrode mixture applied portion in a direction perpendicular to the winding direction.

As shown in Fig. 2, the lead pieces 9 extending from the positive electrode are deformed and all the lead pieces 9 are gathered around a peripheral surface of a flange portion 7 which is spreading integrally from a periphery of a pole stud (positive electrode external terminal 1) positioned approximately on an extension line of the shaft core 11. After the lead pieces 9 are brought into contact with the flange portion 7, the lead pieces 9 and the peripheral surface of the flange portion 7 are connected and fixed to each other by ultrasonic welding. Besides, connecting operation between a negative electrode external terminal 1' and the lead pieces 9 extending from the negative electrode is carried out in the same manner as the connecting operation between the positive electrode external terminal 1 and the lead pieces 9 extending from the positive electrode.

Then, insulating covering 8 is applied on to the entire peripheral surfaces of the flange portions 7 of the positive electrode external terminal 1 and the negative electrode external terminal 1'. The insulating covering 8 is also applied on to the entire outer peripheral surface of the winding group 6. An adhesive tape comprising a base member formed of polyimide and adhesive agent made of hexameta-acrylate and applied to one surface thereof is used for the insulating covering 8. This adhesive tape is wound at least one time from the peripheral surface of the flange portion 7 to the outer peripheral surface of the winding group 6, thereby forming the insulating covering 8. The number of windings of the insulating covering 8 is adjusted such that the insulating covering 8 may exist within the maximum diameter portion of the winding group 6, and the maximum diameter portion is set slightly smaller than the inner diameter of a battery container 5 made of stainless, thereby the winding group 6 is inserted into the battery container 5. The outer and inner diameters of the battery container 5 are respectively 67 mm and 66 mm.

. Next, second ceramic washers 3' are respectively fitted on the pole stud whose distal end constitutes the positive electrode external terminal 1 and the pole stud whose distal end constitutes the negative electrode external terminal 1' . Each second ceramic washer 3' is made of alumina and has a portion abutting on a back face of a disk-shaped battery lid (lid plate) 4, the abutting portion having a thickness of 2 mm, an inner diameter of 16 mm and an outer diameter of 25 mm. Further, alumina-made first planer ceramic washers 3 are respectively placed on the battery lids 4, and the positive electrode external terminal 1 and the negative electrode external terminal 1'are respectively inserted into the first ceramic washers 3. Each first planer ceramic washer 3 has a thickness of 2 mm, an inner diameter of 16 mm and an outer diameter of 28 mm. Then, peripheral end faces of the battery lids 4 are fitted to opening portions of the battery container 5 and the entire contacting portion between the battery lids 4 and the battery container 5 is laser-welded. At this time, the positive electrode external terminal 1 and the negative electrode external terminal 1' project outside the battery lids 4 through holes formed at centers of the battery lids 4. After this, the first ceramic washer 3 and a metal washer 14 which is smoother than the bottom face of a metal nut 2 are fitted on each of the positive electrode external terminal 1 and the negative electrode external terminal 1' in this order. Incidentally, as an internal pressure reducing mechanism, a cleavage valve 10, which cleaves according to an increase in battery internal pressure, is equipped with one of the battery lids 4. The cleavage valve 10 is set to a cleaving pressure of 1.3 x 10⁶ to 1.8 x 10⁶ Pa.

Next, the nut 2 is screwed to each of the positive electrode external terminal 1 and the negative electrode external terminal 1' to fasten and fix the battery lid 4 with the flange portion 7 through the second ceramic washer 3', the first ceramic washer 3 and the metal washer 14. At this time, a value of fastening torque was approximately 7 N · m. Incidentally, the metal washer 14 was not rotated until the fastening work was completed. In this state, generating elements, which is mainly constituted the winding group 6, accommodated in the battery container 5 are shut off from the atmosphere through deformation of each O-ring 16 made of rubber (EPDM) interposed between the back face of the battery lid 4 and the flange portion 7.

Thereafter, a predetermined amount of non-aqueous electrolytic solution is injected from an injection port 15 equipped with the battery lid 4 into the battery container 5 and then the injection port 15 is sealed, thereby assembling of the cylindrical lithium-ion battery 20 is completed.

The non-aqueous electrolytic solution is prepared previously in the following manner: Lithium hexafluorophosphate (LiPF₆) is dissolved at 1 mole/liter into mixed solution of ethylene carbonate, dimethyl carbonate and diethyl carbonate at a volume ratio of 1: 1: 1. Incidentally, the cylindrical lithium-ion battery 20 is not provided with a PTC (Positive Temperature Coefficient) element, for example, which shuts off current according to a temperature increase in the battery container 5, or a current shutting-off mechanism which shuts off connection electrically according to an increase in battery internal pressure.

### [Examples]

Next, Examples of the cylindrical lithium-ion battery 20 manufactured according to the present embodiment, in which the average particle diameter of the negative electrode carbon material (binding particles C), the shape and the average particle diameter of the graphite particles G, the ratio of amorphous carbon phase and the like were changed variously, will be explained below. Incidentally, batteries of Controls (comparison examples) manufactured for comparing with the batteries of Examples will also be explained.

### (Example 1)

As shown in the following Table 1, in Example 1, carbon binding particles having the average particle diameter of 36 µm manufactured by using mesophase type spherical graphite (manufactured by Kawasaki Steel, Trade name: KMFC) having the average particle diameter of 8 µm as the negative electrode carbon material were used. At this time, the ratio of amorphous carbon phase was 16%.

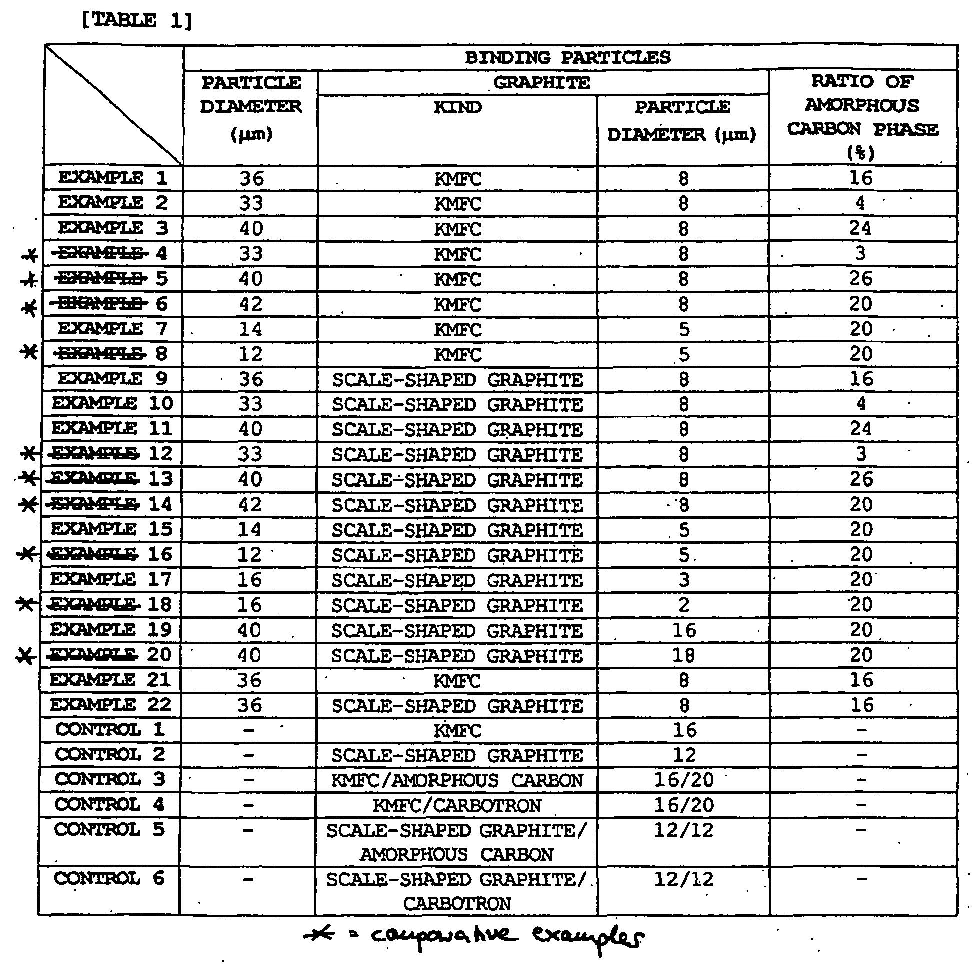

### (Example 2)

As shown in Table 1, in Example 2, a battery was manufactured in the same manner as the Example 1 except that the carbon binding particles having the average particle diameter of 33 µm manufactured by using KMFC having the average particle diameter of 8 µm were used. At this time, the ratio of amorphous carbon phase was 4%.

### (Example 3)

As shown in Table 1, in Example 3, a battery was manufactured in the same manner as the Example 1 except that the carbon binding particles having the average particle diameter of 40 µm manufactured by using KMFC having the average particle diameter of 8 µm were used. At this time, the ratio of amorphous carbon phase was 24%.

### (Comparative Example 4)

As shown in Table 1, in Comparative Example 4, a battery was manufactured in the same manner as the Example 1 except that the carbon binding particles having the average particle diameter of 33 µm manufactured by using KMFC having the average particle diameter of 8 µm were used. At this time, the ratio of amorphous carbon phase was 3%.

### (Comparative Example 5)

As shown in Table 1, in Comparative Example 5, a battery was manufactured in the same manner as the Example 1 except that the carbon binding particles having the average particle diameter of 40 µm manufactured by using KMFC having the average particle diameter of 8 µm were used. At this time, the ratio of amorphous carbon phase was 26%.

### (Comparative Example 6)

As shown in Table 1, in Comparative Example 6, a battery was manufactured in the same manner as the Example 1 except that the carbon binding particles having the average particle diameter of 42 µm manufactured by using KMFC having the average particle diameter of 8 µm were used. At this time, the ratio of amorphous carbon phase was 20%.

### (Example 7)

As shown in Table 1, in Example 7, a battery was manufactured in the same manner as the Example 1 except that the carbon binding particles having the average particle diameter of 14 µm manufactured by using KMFC having the average particle diameter of 5 µm were used. At this time, the ratio of amorphous carbon phase was 20%.

### (Comparative Example 8)

As shown in Table 1, in Comparative Example 8, a battery was manufactured in the same manner as the Example 1 except that the carbon binding particles having the average particle diameter of 12 µm manufactured by using KMFC having the average particle diameter of 5 µm were used. At this time, the ratio of amorphous carbon phase was 20%.

### (Example 9)

As shown in Table 1, in Example 9, the carbon binding particles having the average particle diameter of 36 µm manufactured by using scale-shaped graphite having the average particle diameter of 8 µm were used. At this time, the ratio of amorphous carbon phase was 16%.

### (Example 10)

As shown in Table 1, in Example 10, a battery was manufactured in the same manner as the Example 1 except that the carbon binding particles having the average particle diameter of 33 µm manufactured by using the same scale-shaped graphite as the Example 9 were used. At this time, the ratio of amorphous carbon phase was 4%.

### (Example 11)

As shown in Table 1, in Example 11, a battery was manufactured in the same manner as the Example 1 except that the carbon binding particles having the average particle diameter of 40 µm manufactured by using the same scale-shaped graphite as the Example 9 were used. At this time, the ratio of amorphous carbon phase was 24%.

### (Comparative Example 12)

As shown in Table 1, in Comparative Example 12, a battery was manufactured in the same manner as the Example 1 except that the carbon binding particles having the average particle diameter of 33 µm manufactured by using the same scale-shaped graphite as the Example 9 were used. At this time, the ratio of amorphous carbon phase was 3%

### (Comparative Example 13)

As shown in Table 1, in Comparative Example 13, a battery was manufactured in the same manner as the Example 1 except that the carbon binding particles having the average particle diameter of 40 µm manufactured by using the same scale-shaped graphite as the Example 9 were used. At this time, the ratio of amorphous carbon phase was 26%.

### (Comparative Example 14)

As shown in Table 1, in Comparative Example 14, a battery was manufactured in the same manner as the Example 1 except that the carbon binding particles having the average particle diameter of 42 µm manufactured by using the same scale-shaped graphite as the Example 9 were used. At this time, the ratio of amorphous carbon phase was 20%.

### (Example 15)

As shown in Table 1, in Example 15, the carbon binding particles having the average particle diameter of 14 µm manufactured by using the scale-shaped graphite having the average particle diameter of 5 µm were used. At this time, the ratio of amorphous carbon phase was 20%.

### (Comparative Example 16)

As shown in Table 1, in Comparative Example 16, a battery was manufactured in the same manner as the Example 15 except that the carbon binding particles having the average particle diameter of 12 µm manufactured by using the same scale-shaped graphite as the Example 15 were used. At this time, the ratio of amorphous carbon phase was 20%.

### (Example 17)

As shown in Table 1, in Example 17, the carbon binding particles having the average particle diameter of 16 µm manufactured by using the scale-shaped graphite having the average particle diameter of 3 µm were used. At this time, the ratio of amorphous carbon phase was 20%.

### (Comparative Example 18)

As shown in Table 1, in Comparative Example 18, the carbon binding particles having the average particle diameter of 16 µm manufactured by using the scale-shaped graphite having the average particle diameter of 2 µm were used. At this time, the ratio of amorphous carbon phase was 20%.

### (Example 19)

As shown in Table 1, in Example 19, the carbon binding particles having the average particle diameter of 40 µm manufactured by using the scale-shaped graphite having the average particle diameter of 16 µm were used. At this time, the ratio of amorphous carbon phase was 20%.

### (Comparative Example 20)

As shown in Table 1, in Comparative Example 20, the carbon binding particles having the average particle diameter of 40 µm manufactured by using the scale-shaped graphite having the average particle diameter of 18 µm were used. At this time, the ratio of amorphous carbon phase was 20%.

### (Example 21)

As shown in Table 1, in Example 21, a battery was manufactured in the same manner as the Example 1 except that the thermosetting plasticized polyvinyl alcohol resin composition was used as the binder.

### (Example 22)

As shown in Table 1, in Example 22, a battery was manufactured in the same manner as the Example 9 except that the thermosetting plasticized polyvinyl alcohol resin composition was used as the binder.

### (Control 1)

As shown in Table 1, in Control 1, KMFC having the average particle diameter of 16 µm was used as the negative electrode carbon material. Therefore, the graphite particles are not bound with the amorphous carbon unlike the above described Examples.

### (Control 2)

As shown in Table 1, in Control 2, a battery was manufactured in the same manner as the Control 1 except that the scale-shaped graphite having the average particle diameter of 12 µm were used as the negative electrode carbon material.

### (Control 3)

As shown in Table 1, in Control 3, mixture (mixing ratio is 80: 20) of KMFC having the average particle diameter of 16 µm and the amorphous carbon having the average particle diameter of 20 µm, which is obtained by sintering the petroleum pitch at 1400°C and then cracked, was used as the negative electrode carbon-material.

### (Control 4)

As shown in Table 1, in Control 4, mixture (mixing ratio is 80: 20) of KMFC having the average particle diameter of 16 µm and the amorphous carbon having the average particle diameter of 20 µm (manufactured by Kureha Chemical Industry Co., Ltd., Trade Name: Carbotron) was used as the negative electrode carbon material.

### (Control 5)

As shown in Table 1, in Control 5, mixture (mixing ratio is 80: 20) of the scale-shaped graphite having the average particle diameter of 12 µm and the amorphous carbon having the average particle diameter of 12 µm, which is obtained by sintering the petroleum pitch at 1400 °C and then cracked, was used as the negative electrode carbon material.

### (Control 6)

As shown in Table 1, in Control 6, mixture (mixing ratio is 80: 20) of the scale-shaped graphite having the average particle diameter of 12 µm and the amorphous carbon having the average particle diameter of 12 µm (manufactured by Kureha Chemical Industry Co., Ltd., Trade Name: Carbotron) was used as the negative electrode carbon material.

### [Test & Evaluation]

Next, regarding the respective batteries of the Examples and Controls manufactured in the above manner, a series of tests were performed in the following manner.

After each of the respective batteries of the Examples and Controls was charged at the room temperature as an environmental temperature of 25 ± 2 °C, it was discharged so as to measure its discharging capacity. The charging conditions were set on a constant voltage of 4.2V, a limiting current of 90A, and a charging time of 3.5 hours. The discharging conditions were set on a constant current of 30A and a final voltage of 2.7V. Each of the batteries of the Examples and Controls could obtain discharging capacity of approximately 90 Ah. Initial charging/discharging efficiency (%) was defined as a ratio of initial discharging capacity to initial charging capacity.

Further, the discharging power of each battery at the DOD of 0% and at the DOD of 80% was measured under the above conditions. The measurement was carried out as follows: Each voltage of the tenth second at each discharging current of 10A, 30A and 90A was read and the measured voltages were plotted on a graph of which vertical axis of voltage value to horizontal axis of current value is constituted, the current value was determined by a point where a straight line in which an approximate collinear by connecting three points intersects a final voltage of 2.7V, and then the product of the current value by the 2.7V was calculated as an initial power for each battery. Incidentally, a power at the DOD of 80% was indicated by calculating a percentage of the power measured at the DOD of 80% to the power measured at the DOD of 0%

. Further, after each battery of the Examples and Controls were repeated 100 cycles of charging and discharging under the above conditions at a high environmental temperature of 60 ± 2 °C, the discharging capacity and the power at the DOD of 0% were measured. A percentage of the discharging capacity of the 100th cycle to the initial discharging capacity and a percentage of the power of the 100th cycle to the initial power were calculated respectively as a discharging capacity retaining percentage and a power retaining percentage. It goes without saying that, higher retaining percentages are, more excellent life characteristics are.

The measurements of the discharging capacity and the power were conducted in the atmosphere of an environmental temperature of 25 ± 2 °C.

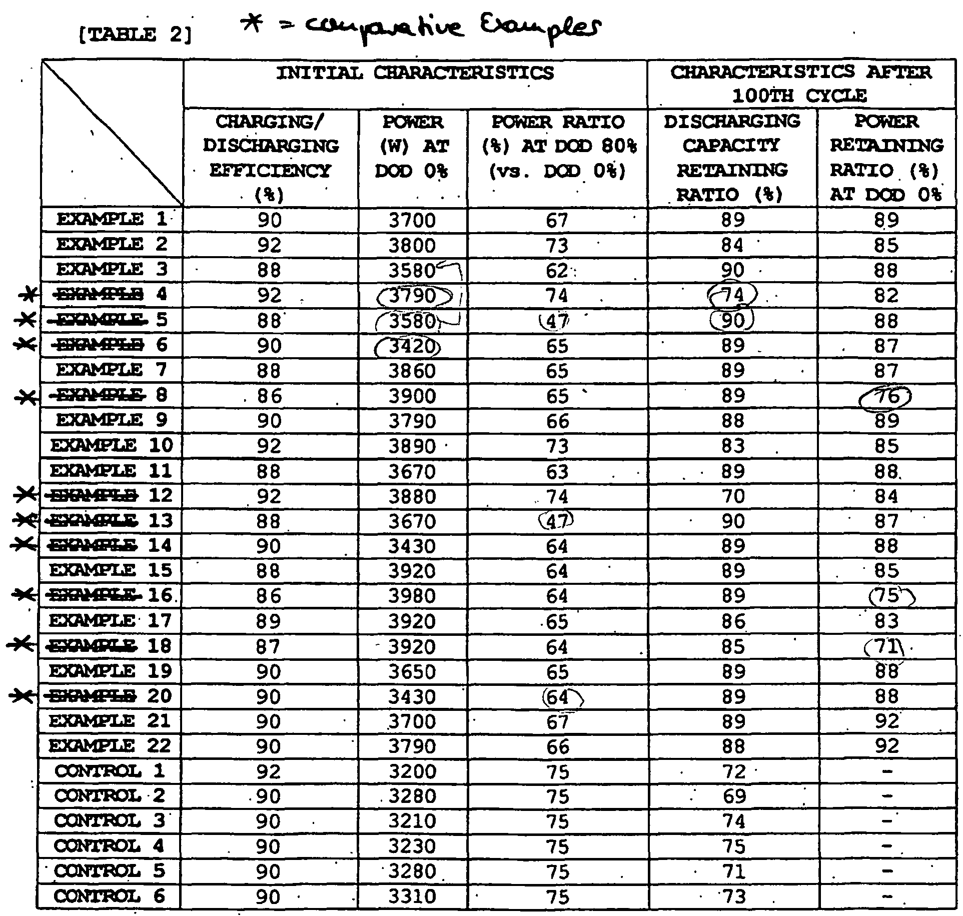

As shown in Table 2, in each battery of the Examples, higher initial power was obtained than that of the Controls. Among them, in each battery of Examples 9-11,15,17 and 19 where the binding particles which the scale-shaped graphite particles are bound with the amorphous carbon was used as the negative electrode carbon material, more higher initial power was obtained.

In each battery of Examples 1 to 3, comparative Example 6, Example 7, Comparative Example 8, Examples 9 to 11, Comparative Example 14, Example 15, Comparative Example 16, Example 17, Comparative Example 18, Example 19 and Comparative Example 20 where the ratio of amorphous carbon phase was set in the range of from 4 to 24%, the initial power at the DOD of 80% and the discharging capacity retaining percentage after the 100th cycle of the charging/discharging at the high temperature demonstrated high values. On the other hand, in each battery of comparative Examples 5 and 13 where the ratio of amorphous carbon phase was set to 26% which was over 24%, the initial power at the DOD of 80% exhibited low values. Further, in each battery of Comparative Examples 4 and 12 where the ratio of amorphous carbon phase was set to 3% which was below 4%, the discharging capacity retaining percentage after the 100th cycle of the charging/discharging at the high temperature exhibited low values.

In each battery of Examples 1 to 3, Examples 7, 9 to 11 and Comparative Examples 12 and 13, Example 15, comparative Example 16, Example 17, comparative example 18, Example 19, Comparative Example 20, where the average particle diameter of the binding particles was set in the range of from 14 to 40 µm, the initial charging/discharging efficiency, the initial power at the DOD of 0% and the power retaining percentage after the 100th cycle of the charging/discharging at the high temperature demonstrated high values. On the other hand, in each battery of Comparative Examples 6 and 14 where the average particle diameter was set to 42 µm which was over 40 µm, the initial power at the DOD of 0% exhibited low values. Further, in each battery of Comparative Examples 8 and 16 where the average particle diameter was set to 12 µm which was below 14 µm, the power retaining percentage after the 100th cycle of the charging/discharging at the high temperature exhibited low values and the initial charging/discharging efficiency exhibited low values ++ slightly.

In each battery of Examples 1-3, 7, 9-11, 15, 17 and 19 where the average particle diameter of the graphite particles which constitute the binding particles was set in the range of from 3 to 16 µm, the initial charging/discharging efficiency, the initial power at the DOD of 0% and the power retaining percentage after the 100th cycle of the charging/discharging at the high temperature demonstrated high values. On the other hand, in the battery of Comparative Example 20 where the average particle diameter of the graphite particles which constitute the binding particles was set to 18 µm which was over 16 µm, the initial power at the DOD of 0% exhibited low value. Further, in battery of Comparative Example 18 where the average particle diameter of the graphite particles which constitute the binding particles was set to 2 µm which was below 3 µm, the power retaining percentage after the 100th cycle of the charging/discharging at the high temperature exhibited low value and the initial charging/discharging efficiency exhibited low value slightly.

In each battery of Examples 21 and 22 where the thermosetting plasticized polyvinyl alcohol resin composition was used as the binder, the power retaining percentage after the 100th cycle of the charging/discharging at the high temperature demonstrated high values extremely.

As mentioned above, the cylindrical lithium-ion battery 20 of the present embodiment could obtain the stable power regardless of the DOD. Further, when the ratio of amorphous carbon phase in the negative electrode carbon material was set in the range of from 4 to 24 %, the battery where the power can be suppressed from decreasing even when the DOD becomes deep and the discharging capacity retaining percentage remains high could be obtained. Accordingly, the residual capacity could be detected easily by measuring the voltage. Furthermore, when the average particle diameter of the binding particles was set in the range of from 14 to 40 µm, the battery which has the excellent initial charging/discharging efficiency, the high initial power and the high power retaining percentage could be obtained. Moreover, when the average particle diameter of the graphite particles was set in the range of from 3 to 16 µm, the battery which has the excellent initial charging/discharging efficiency, the high initial power and the high power retaining percentage could be obtained. When the thermosetting plasticized polyvinyl alcohol resin composition was used as the binder of the above binding particles, the battery which has the higher power retaining percentage could be realized.

Incidentally, in the present embodiment, the large-sized secondary batteries used for a power source for the electric vehicle have been explained; however, when the batteries can discharge 50 W or more for at least 10 seconds continuously, the present invention is not limited to the sizes of the batteries and the battery capacities described in the embodiment. It has been confirmed that the present invention exhibited significant effects in a battery whose battery capacity is about 15 Ah. Further, in the present embodiment, the cylindrical batteries have been explained, but the present invention is not limited to any specific shape. The present invention is also applicable to a battery with a rectangular shape, a battery with a polygonal shape or a laminated type battery. Furthermore, the present invention is applicable to the shape other than the battery where positive and negative external terminals penetrate the battery lids and the positive and negative external terminals push with each other via a shaft rod within the battery container as described above. As such a structure, for example, the battery having the structure where the battery upper lid is caulked to the cylindrical container (can) having a bottom so that the container is sealed may be listed up.

Further, regarding the graphite which consists of the binding particles as the negative electrode carbon material for a lithium-ion battery other than the present embodiment which may be used, there is not any limitation except for the scope of the invention as claimed below. For example, as the graphite, natural graphite, various artificial graphite materials, or the like may also be used. Furthermore, the particle shapes of the graphite may include scale shape, sphere shape, fiber shape, massive shape, and the like. The graphite used in this invention is not limited to the specific shape explained in the embodiment. However, the scale-shaped graphite can obtain more desirable effect.

Furtermore, in the present embodiment, the lithium manganate was used for the positive electrode for the lithium-ion battery, the solution prepared by dissolving lithium hexafluorophosphate at 1 mole/liter into the mixed solution of ethylene carbonate, dimethyl carbonate and diethyl carbonate at the volume ratio of 1: 1: 1 was used as the electrolytic solution. However, the present invention is not limited to these materials and solution. Moreover, as the conductive material and the binder, ones which are used ordinarily may be used in this invention. Further, the present invention is not limited to mixed composition of the positive electrode mixture layer and the negative electrode mixture layer, an applied amount of the mixture, an electrode mixture density and an electrode thickness. In general, the lithium manganate can be composed by mixing and sintering suitable lithium salt and manganese oxide, and the desired Li/Mn ratio can be achieved by controlling preparation ratio of lithium salt and manganese oxide.

Moreover, as positive electrode active materials for a lithium-ion battery other than the present embodiment which may be used, it is preferable to use lithium-manganese complex oxide in/from lithium ions can be occluded/released and a sufficient amount of lithium has been occluded in advance. A lithium manganate having a spinel structure or a material where a site of manganese or lithium has been substituted or doped with other metal (for example, Li, Fe, Co, Ni, Cr, Al, Mg and the like) may be used as the active material.

Further, as the non-aqueous electrolytic solution, the electrolytic solution prepared by using an ordinary lithium salt as an electrolyte to dissolve the lithium salt in an organic solvent can be used, where a lithium salt and an organic solvent to be used are not limited to specific materials. For example, as the electrolyte, LiClO₄, LiAsF₆, LiPF₆, LiBF₄, LiB (C₆H₅)₄, CH₃SO₃Li, CF₃SO₃Li or the like, or mixture thereof may be used. As the non-aqueous electrolytic solution organic solvent, polypropylene carbonate, ethylene carbonate, 1,2-dimethxy ethane, 1,2-diethxy ethane, γ-butyrolactone, tetrahydofuran, 1,3-dioxolane, 4-mehyl-1, 3-dioxolane, diethyl ether, sulfolane, methyl-sulfolane, acetonitrile, propionitrile, or the like, or mixed solvent of at least two kinds thereof may be used, and the composition ratio of mixture is not limited to any specific range. Furthermore, as the electrolyte other than the above electrolyte, polyelectrolyte where the lithium salt is dispersed and dissolved in macromolecule may be used so that the present invention can obtain the effect.

Furthermore, as binders other than the present embodiment which may be used, there are polymers such as Teflon, polyethylene, polystyrene, polybutadiene, isobutylene-isopren rubber, nitrile rubber, styrene-butadiene rubber, polysulfide rubber, cellulose nitrate, cyanoethyl cellulose, various latex, acrylonitrile, vinyl fluoride, vinylidene fluoride, propylene fluoride, chloroprene fluoride and the like, and mixture thereof. However, as explained in the Examples, when the thermosetting plasticized polyvinyl alcohol resin composition is used, the battery which has extremely the high power retaining ratio can be obtained even after repeating the cycles of the charging/discharging at the high temperature.

Moreover, in the present embodiment, the example where, as the insulating covering or coating, the adhesive tape comprising the base material of polyimide and the adhesive agent of hexametha-acrylate applied to one side surface thereof was used was explained. However, this invention is not limited to this adhesive tape. For example, an adhesive tape comprising a base material of polyolefin such as polypropylene, polyethylene or the like, and acrylic system adhesive agent such as hexametha-acrylate, butyl-acrylate or the like applied to one side surface or both side surfaces of the base material, or tape without applying adhesive agent thereon and comprising polyolefin or polyimide or the like may also be used preferably.

## Claims

1. A secondary battery for an electric or hybrid electric vehicle comprising an electrode group wherein a positive electrode having lithium-manganese complex oxide as positive electrode active material, and a negative electrode having carbon material as negative electrode active material and resin composition as a binder, being separated through a separator, and the electrode group being infiltrated by non-aqueous electrolytic solution and accommodated in a battery container,
**characterized in that**
the carbon material consists of binding particles (C) in which graphite particles (G) are bound together via an amorphous carbon (A), and wherein
a ratio of the amorphous carbon in the binding particles is set in a range of from 4% to 24% to weight of the binding particles,
an average particle diameter of the binding particles is set in a range of from 14 µm to 40 µm, and
an average particle diameter of the graphite particles is set in a range of from 3 µm to 16 µm.

2. The secondary battery according to claim 1, wherein the graphite particles are scale-shaped graphite particles.

3. The secondary battery according to claim 1 or 2, wherein the resin composition comprising thermosetting plasticized polyvinyl alcohol resin whose main constituent is polyvinyl alcohol and whose property is changed.

4. The secondary battery according to claim 3, wherein the resin composition includes a first resin component which is consisted of thermosetting polyvinyl alcohol group resin and a second resin component which is consisted of acrylic resin group plasticizer.

5. The secondary battery according to claim 4, wherein the first resin component is consisted of thermosetting polyvinyl alcohol group resin which polyvinyl alcohol group resin having an average degree of polymerization of approximately 2000 reacted with cyclic acid anhydride.

6. The secondary battery according to claim 4 or 5, wherein the second resin component is consisted of acrylic resin group plasticizer which lauryl acrylate/acrylic acid copolymer reacted with bifunctional type epoxy resin.

7. The secondary battery according to any one of claims 1 to 6, wherein a capacity of the battery is 15 Ah or more.

## Patentansprüche

1. Ein Akkumulator für ein elektrisches oder Hybrid-Fahrzeug, umfassend eine Gruppe von Elektroden, wobei eine positive Elektrode ein Lithium-Mangankomplexoxid als positives, aktives Elektrodemnaterial besitzt und eine negative Elektrode ein Kohlenstoffmaterial als negatives, aktives Elektrodenmaterial besitzt, und eine Harzzusammensetzung als Bindemittel, wobei sie voneinander durch einen Separator getrennt sind, und die Gruppe von Elektroden von nicht-wässriger, elektrolytischer Lösung durchsetzt und in einem Batteriebehältnis untergebracht ist, **dadurch gekennzeichnet, dass**
das Kohlenstoffmaterial aus Bindungspartikeln (C) besteht, in dem Graphitpartikel (G) mittels eines amorphen Kohlenstoffs (A) miteinander verbunden sind, und wobei ein Verhältnis des amorphen Kohlenstoffs in den Bindungspartikeln in einem Bereich von 4 Gew.-% bis 24 Gew.-% der Bindungspartikel liegt,
ein durchschnittlicher Partikeldurchmesser der Bindungspartikel in einem Bereich von 14 µm bis 40 µm liegt, und
ein durchschnittlicher Partikeldurchmesser der Graphitpartikel in einem Bereich von 3 µm bis 16 µm liegt.

2. Der Akkumulator nach Anspruch 1, wobei die Graphitpartikel schuppenförmige Graphitpartikel sind.

3. Der Akkumulator nach Anspruch 1 oder 2, wobei die Harzzusammensetzung ein wärmehärtbares Weich-Polyvinylalkoholharz umfasst, dessen Hauptbestandteil Polyvinylalkohol ist und dessen Eigenschaft verändert ist.

4. Der Akkumulator nach Anspruch 3, wobei die Harzzusammensetzung eine erste Harzkomponente, die aus einem wärmehärtbarem Harz der Polyvinylalkoholgruppe besteht, und eine zweite Harzkomponente, die aus einem Weichmacher aus der Gruppe der Acrylharze besteht, beinhaltet.

5. Der Akkumulator nach Anspruch 4, wobei die erste Harzkomponente aus einem wärmehärtbarem Harz der Polyvinylalkoholgruppe umgesetzt mit einem cyclischen Säureanhydrid besteht, wobei das Harz der Polyvinylalkoholgruppe einen durchschnittlichen Polymerisationsgrad von etwa 2000 aufweist.

6. Der Akkumulator nach Anspruch 4 oder 5, wobei die zweite Harzkomponente aus einem Weichmacher der Acrylharzgruppe besteht, in dem ein Laurylacrylat/Acrylsäure Copolymer mit einem bifunktionalen Epoxyharz umgesetzt ist.

7. Der Akkumulator nach einem der Ansprüche 1 bis 6, wobei die Kapazität der Batterie 15 Ah oder mehr ist.

## Revendications

1. Batterie secondaire pour un véhicule électrique ou hybride électrique comprenant un groupe d'électrodes dans lequel une électrode positive ayant un oxyde complexe de lithium-manganèse en tant que matériau actif d'électrode positive, et une électrode négative ayant un matériau carboné en tant que matériau actif d'électrode négative et une composition de résine en tant que liant, sont séparées par l'intermédiaire d'un séparateur, le groupe d'électrodes étant infiltré par une solution électrolytique non aqueuse et logé dans un logement de batterie,
**caractérisée en ce que**
le matériau carboné est constitué de particules liantes (C) dans lesquelles des particules de graphite (G) sont liées ensemble via un carbone amorphe (A), et ou
un rapport du carbone amorphe dans les particules liantes est établi dans une plage allant de 4 % à 24 % en poids des particules liantes,
une granulométrie moyenne des particules liantes est établie dans une plage allant de 14 µm à 40 µm, et
une granulométrie moyenne des particules de graphite est établie dans une plage allant de 3 µm à 16 µm.

2. Batterie secondaire selon la revendication 1, dans laquelle les particules de graphite sont des particules de graphite en forme d'écaille.

3. Batterie secondaire selon la revendication 1 ou 2, dans laquelle la composition de résine comprend une résine d'alcool polyvinylique plastifiée thermodurcissable dont le constituant principal est l'alcool polyvinylique et dont la propriété est changée.

4. Batterie secondaire selon la revendication 3, dans laquelle la composition de résine comprend un premier composant résine constitué d'une résine de type alcool polyvinylique thermodurcissable et un deuxième composant résine constitué d'un plastifiant de type résine acrylique.

5. Batterie secondaire selon la revendication 4, dans laquelle le premier composant résine est constitué d'une résine de type alcool polyvinylique thermodurcissable, cette résine de type alcool polyvinylique ayant un degré moyen de polymérisation d'environ 2000, qui a réagi avec un anhydride d'acide cyclique.

6. Batterie secondaire selon la revendication 4 ou 5, dans laquelle le deuxième composant résine est constitué d'un plastifiant de type résine acrylique où un copolymère d'acrylate de lauryle/acide acrylique a réagi avec une résine époxy de type bifonctionnel.

7. Batterie secondaire selon l'une quelconque des revendications 1 à 6, dans laquelle la capacité de la batterie est de 15 Ah ou plus.
